# EUROPEAN PATENT SPECIFICATION

(11) **EP 3 457 657 B1**
(45) Date of publication and mention of the grant of the patent: **30.12.2020**
(21) Application number: 18194005.7
(22) Date of filing: 12.09.2018
(51) Int. Cl.: H04L 29/06, H04L 12/46, H04L 12/931, H04W 12/06, H04W 12/08

(54) **ACCESS CONTROL METHOD AND SYSTEM, AND SWITCH**
ZUGANGSSTEUERUNGSVERFAHREN UND -SYSTEM, UND SWITCH
PROCÉDÉ ET SYSTÈME DE CONTRÔLE D'ACCÈS, ET COMMUTATEUR

(30) Priority: 13.09.2017 CN 201710822104
(43) Date of publication of application: 20.03.2019
(73) Proprietor: Huawei Technologies Co., Ltd., Shenzhen, Guangdong 518129 (CN)
(72) Inventor: Xu, Yibin, Shenzhen, Guangdong 518129 (CN)
(74) Representative: Epping - Hermann - Fischer

(56) References cited:
- US-A1- 2009 307 751
- US-A1- 2012 054 358
- US-A1- 2013 121 321
- US-B1- 8 443 187

## Description

### TECHNICAL FIELD

This application relates to the field of network security technologies, in particular, to an access control method, apparatus, and system, and a switch.

### BACKGROUND

A terminal device can access a network only after identity authentication is successful. Common identity authentication methods include Institute of Electrical and Electronics Engineers (IEEE) 802.1X authentication, Media Access Control (MAC) authentication, and captive portal authentication (also referred to as web authentication). For the IEEE 802.1X authentication, the terminal device needs to install client software and initiate an authentication process by using the client software. The MAC authentication is based on a MAC address, and a terminal device using a MAC address in a white list passes the MAC authentication. The captive portal authentication is based on a Hypertext Transfer Protocol (English: Hyper Text Transport Protocol, HTTP) or Hypertext Transfer Protocol over Secure Socket Layer (English: Hyper Text Transfer Protocol over Secure Socket Layer, HTTPS) request sent by a terminal device.

Currently, an authentication method is selected based on a physical port of an authentication device. The authentication method is monotonous.

US8443187B1 discloses a method comprising: receiving, from an authenticator having a plurality of ports through which connections to one or more computing devices can be made: a port identifier identifying one of the plurality of ports through which one of the one or more computing devices is connected to the authenticator; and one or more credentials identifying the one of the one or more computing devices, at least one of the one or more credentials including a location; authenticating the one of the one or more computing devices based on the one or more credentials and the port identifier; and responsive to authenticating the one of the one or more computing devices, permitting an action of the one of the one or more computing devices.

US20120054358A1 discloses a network relay device including: a plurality of ports to which external devices connect, and configured pre-correlated with types of authentication to be conducted with respect to connected external devices; an authentication process section for conducting, when an external device is connected to the network relay device, mutual authentication between the network relay device and the external device in accordance with the type of authentication that a port to which the external device is connected is configured for; a relay process section for relaying, without authentication being conducted by the authentication process section, frames received through a port configured for a first authentication type, and for relaying frames received through a port configured for a second authentication type, if authentication by the authentication process section has succeeded.

### SUMMARY

In order to resolve a problem of a monotonous authentication method of an authentication device, this application provides an access control method, apparatus, and system, and a switch. The technical solutions are as follows.

According to a first aspect, an access control method is provided, where the method includes: receiving, by an authentication device, a packet sent by an access device, where the packet includes a virtual local area network (VLAN) identifier; and authenticating, by the authentication device, based on the VLAN identifier in the packet and a preconfigured correspondence by using an authentication method corresponding to the VLAN identifier, a terminal device that sends the packet, where the correspondence includes a mapping from a plurality of VLAN identifiers to at least two authentication methods and the at least two authentication methods comprise MAC authentication and captive portal authentication.

Authentication methods for terminal devices that belong to different VLANs are determined based on VLAN identifiers, so that different authentication methods can be used for the terminal devices in the different VLANs. Therefore, an access manner is more flexible.

Optionally, the correspondence may further include a mapping from a port, connected to the access device, of the authentication device to the plurality of VLAN identifiers. Correspondingly, the authenticating, by the authentication device, based on the VLAN identifier and a preconfigured correspondence by using an authentication method corresponding to the VLAN identifier, a terminal device that sends the packet includes: when the packet is received from the port, authenticating, by the authentication device, by using the authentication method corresponding to the VLAN identifier, the terminal device that sends the packet. On different ports, different authentication methods may be configured for different VLANs, and therefore configuration is more flexible.

In a possible implementation of the first aspect, the authenticating, by the authentication device, by using the authentication method corresponding to the VLAN identifier, the terminal device that sends the packet includes: initiating, by the authentication device, Media Access Control MAC authentication when the authentication method corresponding to the VLAN identifier is MAC authentication and the packet is a first-specified-type packet, where the first-specified-type packet may include an Address Resolution Protocol (ARP) packet, a Dynamic Host Configuration Protocol (DHCP) packet, or the like.

In another possible implementation of the first aspect, the authenticating, by the authentication device, by using the authentication method corresponding to the VLAN identifier, the terminal device that sends the packet includes: initiating, by the authentication device, captive portal authentication when the authentication method corresponding to the VLAN identifier is captive portal authentication and the packet is a second-specified-type packet, where the second-specified-type packet may be an HTTP request packet or an HTTPS request packet. Optionally, the method may further include: obtaining and storing, by the authentication device, the correspondence.

According to a second aspect useful for understanding the invention, an access control apparatus is provided, where the apparatus includes a module configured to implement the method in the first aspect, such as a receiving module and an authentication module.

According to a third aspect, a switch is provided, where the switch includes a processor, a port, and a memory, the port and the memory are separately connected to the processor, and the processor is configured to: receive, by using the port, a packet sent by an access device, where the packet includes a virtual local area network VLAN identifier; and authenticate, based on the VLAN identifier in the packet and a preconfigured correspondence by using an authentication method corresponding to the VLAN identifier, a terminal device that sends the packet, where the correspondence includes a mapping from a plurality of VLAN identifiers to at least two authentication methods and the at least two authentication methods comprise MAC authentication and captive portal authentication.

According to a fourth aspect useful for understanding the invention, a computer-readable storage medium is provided, where the computer-readable storage medium stores an instruction, and when the instruction runs on a computer, the computer executes the method according to any one of the first aspect or implementations of the first aspect.

According to a fifth aspect useful for understanding the invention, a computer program product including an instruction is provided, where the instruction runs on a computer, the computer executes the method according to any one of the first aspect or implementations of the first aspect.

According to a sixth aspect useful for understanding the invention, an access control system is provided, where the system includes an access device and an authentication device, the access device is configured to receive a packet sent by a terminal device, add a VLAN identifier to the received packet, and send the packet added with the VLAN identifier to the authentication device, where the authentication device is configured to execute the method according to any one possible implementation of the first aspect.

### BRIEF DESCRIPTION OF DRAWINGS

FIG. 1 is a schematic diagram of an application scenario according to an embodiment of the present invention;
FIG. 2 is a flowchart of an access control method according to an embodiment of the present invention;
FIG. 3 is a schematic diagram of an access control system according to an embodiment of the present invention;
FIG. 4 is a schematic structural diagram of a switch according to an embodiment of the present invention; and
FIG. 5 is a schematic diagram of an access control apparatus according to an embodiment of the present invention.

### DESCRIPTION OF EMBODIMENTS

To make the objectives, technical solutions, and advantages of this application clearer, the following further describes the implementations of this application in detail with reference to the accompanying drawings.

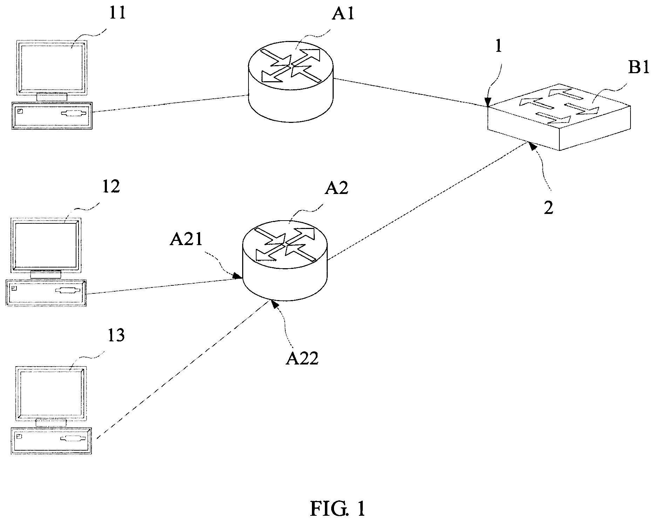

FIG. 1 shows an application scenario according to an embodiment of the present invention. As shown in FIG. 1, access devices A1 and A2 are separately connected to a port of an authentication device B1. To be specific, the access device A1 is connected to a port 1 of the authentication device B1, and the access device A2 is connected to a port 2 of the authentication device B1. A terminal device 11 is connected to the access device A1, and the access device A1 is configured to allow all terminal devices that access the access device A1 by using all ports of the access device A1 to access a VLAN1. A terminal device 12 is connected to the access device A2 by using a first port A21 of the access device A2, and a terminal device 13 is connected to the access device A2 by using a second port A22 of the access device A2. The access device A2 is configured to allow all terminal devices that access the access device A2 by using the first port A21 of the access device A2 to access a VLAN2, and the access device A2 is configured to allow all terminal devices that access the access device A2 by using the second port A22 of the access device A2 to access a VLAN3.

A quantity of access devices in FIG. 1 may be set depending on an actual requirement, not limited to the two shown in FIG. 1, and a quantity of terminal devices connected to each access device may vary depending on an actual requirement. A scenario shown in FIG. 1 may be applied to the following: A plurality of enterprises are in a same campus, a network in the campus is constructed in a centralized manner, and different enterprises access the network by using different access devices or different physical ports of a same access device.

In FIG. 1, the terminal device may be a mobile phone, a notebook computer, a personal computer, or the like. The access device may be a switch that the terminal device is directly connected to when accessing a network and that has no authentication function. An authentication device may also be a switch providing an authentication function. The access device is connected to the authentication device, and the access device sends, to the authentication device, a packet sent by the terminal device, so that the authentication device performs authentication on the terminal device or forwards the packet.

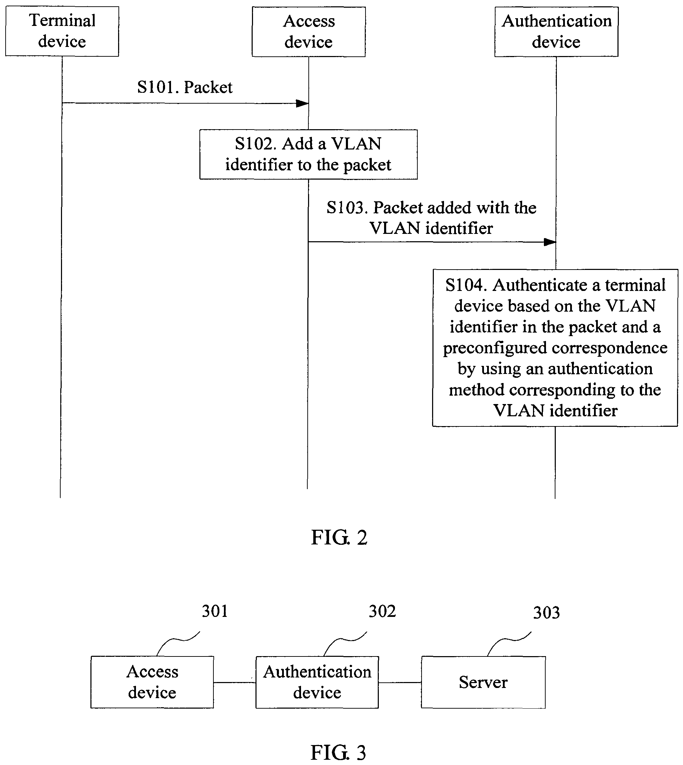

Specifically, a default VLAN identifier is configured for a port, connected to the terminal device, of the access device, and may be referred to as a port VLAN identifier (English: port VLAN ID). When receiving a packet from the port connected to the terminal device, the access device adds the default VLAN identifier of the port to the packet, and sends the packet added with the VLAN identifier to the authentication device. For example, in FIG. 1, the terminal device 11 sends a packet to the access device A1, and the access device A1 receives the packet, adds a VLAN identifier of the VLAN1 to the packet, and then sends the packet carrying VLAN1 to the authentication device B1. For another example, in FIG. 2, the terminal device 12 sends a packet to the access device A2 by using the first port A21 (whose corresponding port VLAN identifier is VLAN2), and the access device A2 receives the packet, adds the VLAN identifier of the VLAN2 to the packet, and then sends the packet carrying VLAN2 to the authentication device B1; the terminal device 13 sends a packet to the access device A2 by using the second port A22 (whose corresponding port VLAN identifier is VLAN3), and the access device A2 receives the packet, adds a VLAN identifier of the VLAN3 to the packet, and then sends the packet carrying VLAN3 to the authentication device B1. After receiving the packet added with the VLAN identifier, the authentication device B1 authenticates, based on the VLAN identifier in the packet, the terminal device that sends the packet, so as to implement access control over the terminal device.

In this embodiment of this application, at least two authentication methods are configured on the authentication device. An example in which two authentication methods are configured and the two authentication methods are MAC authentication and captive portal authentication is used in the following to describe this embodiment of this application.

The following describes in detail an entire access control method with reference to FIG. 2. As shown in FIG. 2, the access control method provided in this embodiment of the present invention may include the following steps.

S101: A terminal device sends a packet to an access device.

Correspondingly, the access device receives the packet. The packet includes at least a source MAC address, and the source MAC address is a MAC address of the terminal device.

S102: The access device adds a VLAN identifier to the packet.

Step S102 may include: The access device determines a port receiving the packet and adds a VLAN identifier corresponding to the port (namely, the aforementioned port VLAN identifier) to the packet.

S103: The access device sends the packet added with the VLAN identifier to an authentication device.

Correspondingly, the authentication device receives the packet carrying the VLAN identifier. S104: The authentication device authenticates, based on the VLAN identifier in the packet and a preconfigured correspondence by using an authentication method corresponding to the VLAN identifier, the terminal device that sends the packet.

In an implementation of this embodiment, the correspondence may include a mapping from a plurality of VLAN identifiers to at least two authentication methods. Different VLAN identifiers may be mapped to a same authentication method or may be mapped to different authentication methods. In other words, each authentication method may be corresponding to one or more VLAN identifiers. The correspondence may be stored in a table form.

In step S104, the authenticating, by using the authentication method corresponding to the VLAN identifier, the terminal device that sends the packet may include: When the authentication method corresponding to the VLAN identifier is MAC authentication and the packet is a first-specified-type packet, the authentication device initiates MAC authentication. The first-type packet may include an Address Resolution Protocol (ARP) packet, a Dynamic Host Configuration Protocol (DHCP) packet, or the like. For example, for the ARP packet, a packet type may be determined based on a value of an Ethertype field in a physical frame header of the packet. For example, if the value of the field is 0x0806, a corresponding packet is an ARP packet.

Further, step S104 may be implemented in the following manner: When the authentication method corresponding to the VLAN identifier is MAC authentication, the authentication device determines whether the packet is a first-specified-type packet, and when the packet is a first-specified-type packet, the authentication device extracts the source MAC address from the packet, and sends the extracted source MAC address to a server for MAC authentication or performs local authentication on the extracted source MAC address; or when the packet is not a first-specified-type packet, normally forwards the packet.

In another embodiment, the authentication device may also directly obtain the source MAC address from the packet and determine whether the obtained source MAC address is a new MAC address, and when the source MAC address is a new MAC address, performs MAC authentication on the obtained source MAC address; or when the source MAC address is not a new MAC address, normally forwards the packet. Specifically, the determining whether the obtained source MAC address is a new MAC address may be querying whether the MAC address exists in a MAC table. If the MAC address does not exist in the MAC table, the source MAC address is considered as a new MAC address.

In this embodiment, determining the packet type of the packet to determine whether the MAC address of the packet is a new MAC address can simplify a process.

Optionally, in step S104, the authenticating, by using the authentication method corresponding to the VLAN identifier, the terminal device that sends the packet may also include: The authentication device initiates captive portal authentication when the authentication method corresponding to the VLAN identifier is captive portal authentication and the packet is a second-specified-type packet. The second-type packet may be a Hypertext Transfer Protocol (HTTP) request packet or a Hypertext Transfer Protocol over Secure Socket Layer (HTTPS) request packet.

Further, step S104 may be implemented in the following manner: When the authentication method corresponding to the VLAN identifier is captive portal authentication, the authentication device determines whether the packet is a second-specified-type packet. When the packet is a second-specified-type packet, the authentication device sends a redirection uniform resource locator (URL) to the terminal device, where the URL points to an address of a portal server. Then, the terminal device opens the redirection URL to open a web authentication page and obtain authentication information (such as a user name and a password) that is input by a terminal user on the web authentication page, and sends obtained web authentication information to the server for authentication or performs local authentication on the obtained user name and password. When the packet is not a second-specified-type packet, the packet is normally forwarded.

The aforementioned server may be a Remote Authentication Dial-In User Service (RADIUS) server.

In another implementation of this embodiment, in addition to the mapping from the plurality of VLAN identifiers to the at least two authentication methods, the correspondence also includes a mapping from a port, connected to the access device, of the authentication device to the plurality of VLAN identifiers. One port of the authentication device may be mapped to one or more VLAN identifiers. Different ports of the authentication device may be corresponding to a same quantity of VLAN identifiers or different quantities of VLAN identifiers. Different ports of the authentication device may be corresponding to different VLAN identifiers. For example, in FIG. 1, a port 1 of the authentication device B1 is corresponding to one VLAN identifier, namely VLAN1, and a port 2 of the authentication device B1 is corresponding to two VLAN identifiers, namely VLAN2 and VLAN3. The correspondence may also be stored in a table form. Correspondingly, step S104 may include: When the packet is received from the port, connected to the access device, of the authentication device, the authentication device authenticates, by using the authentication method corresponding to the VLAN identifier, the terminal device that sends the packet. For example, when the packet is received from the port 1 of the authentication device B1 and the VLAN identifier carried in the packet is VLAN1, the authentication device B1 performs authentication by using an authentication method corresponding to VLAN1. When the packet is received from the port 2 of the authentication device B1 and the VLAN identifier carried in the packet is VLAN2, the authentication device B1 performs authentication by using an authentication method corresponding to VLAN2.

The authentication device in this embodiment of this application may be a network switch. The network switch may not be a gateway device. When the network switch is not a gateway device, the packet is forwarded by using a layer 2.

In an implementation of this embodiment of the present invention, for a terminal device that is authenticated successfully, the authentication device may deliver authorization information to the access device, where the authorization information is used to indicate network access permission of the terminal device, and controls the network access permission of the terminal device based on the authorization information. For a terminal device that fails to be authenticated, the access device may isolate the terminal device.

Optionally, when the terminal device is authenticated successfully, the access control method in this embodiment may further include:
The terminal device may report security status information of the terminal device to a security policy server, such as a virus library version, an operating system version, or an installed patch version; the security policy server delivers authorization information to the access device based on the security status information of the terminal device; and the access device modifies the network access permission of the terminal device based on the authorization information delivered by the security policy server.

Correspondingly, the terminal device may access a software server to perform processing, such as client download, system repair, patch/virus library upgrade, until an enterprise security standard is met.

FIG. 3 is a schematic diagram of an access control system according to an embodiment of the present invention. As shown in FIG. 3, the access control system provided in this embodiment of the present invention includes an access device 301 and an authentication device 302. The access device 301 is configured to perform the steps that are performed by the access device 301 in the method shown in FIG. 2, and the authentication device 302 is configured to perform the steps that are performed by the authentication device 302 in the method shown in FIG. 2.

Optionally, the access control system may also include a server 303. The server may include a portal server, a RADIUS server, and so on.

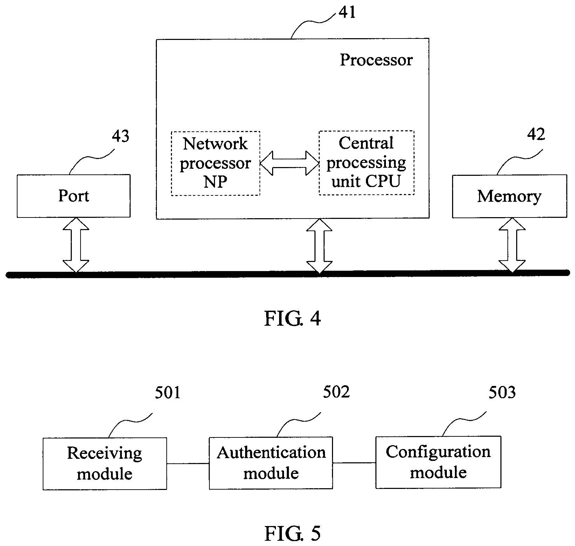

FIG. 4 shows a structural block diagram of a switch according to an embodiment of the present invention. Referring to FIG. 4, hardware of the switch may include a processor 41 with one or more processing cores, a memory 42 including one or more computer-readable storage mediums, a port 43, and the like, and the processor 41 may be connected to the memory 42 and the port 43 by using a bus. A person skilled in the art may understand that a structure shown in FIG. 4 does not constitute any limitation to the switch, and may include more or fewer parts than those shown in the figure, or a combination of some parts, or parts disposed differently.

Optionally, the processor 41 may include one or more processing modules, and the processing module may be a central processing unit (CPU), a network processor (NP), or the like.

The port 43 may be an Ethernet port. The port 43 is controlled by the processor 41.

The memory 42 may be configured to store various data, such as various configuration parameters (for example, the aforementioned correspondence) and a computer instruction. The computer instruction may be executed by the processor 41. The memory 42 may include a high-speed random access memory, and may further include a non-volatile memory, for example, at least one magnetic disk, a flash memory, or another volatile solid-state storage device. Correspondingly, the memory 42 may further include a memory controller, to support access to the memory 42 by the processor 41.

In this embodiment of this application, the processor 41 is configured to receive, by using the port 43, a packet sent by the access device, and is configured to execute an instruction in the memory to implement the steps that need to be performed by the authentication device shown in FIG. 2.

An embodiment of the present invention further provides an access control apparatus. Referring to FIG. 5, the access control apparatus includes a receiving module 501 and an authentication module 502. The receiving module 501 is configured to receive a packet sent by an access device, where the packet includes a VLAN identifier; and the authentication module 502 is configured to authenticate, based on the VLAN identifier and a preconfigured correspondence by using an authentication method corresponding to the VLAN identifier, a terminal device that sends the packet, where the correspondence includes a mapping from a plurality of VLAN identifiers to at least two authentication methods.

Optionally, the correspondence may further include a mapping from a port, connected to the access device, of an authentication device to the plurality of VLAN identifiers. Optionally, the authentication module 502 is configured to, when the packet is received from the port, authenticate, by using the authentication method corresponding to the VLAN identifier, the terminal device that sends the packet.

In an implementation of this embodiment of the present invention, the authentication module 502 is configured to initiate Media Access Control MAC authentication when the authentication method corresponding to the VLAN identifier is MAC authentication and the packet is a first-specified-type packet.

In another implementation of this embodiment of the present invention, the authentication module 502 is configured to initiate captive portal authentication when the authentication method corresponding to the VLAN identifier is captive portal authentication and the packet is a second-specified-type packet.

Optionally, the access control apparatus may further include a configuration module 503, where the configuration module 503 is configured to obtain and store the aforementioned correspondence.

For related details, refer to the method embodiment of FIG. 2.

The authentication module 502 and the configuration module 503 may be implemented by a processor or by executing a program instruction in a memory by a processor. The receiving module 501 may be implemented by a port or by a port and a processor.

It should be noted that the embodiments of the access control apparatus and the access control method provided by the foregoing embodiments belong to a same conception. For a specific implementation process thereof, refer to the method embodiment. Details are not described again herein.

All or some of the foregoing embodiments may be implemented by means of software, hardware, or a combination thereof. When a software program is used to implement the embodiments, the embodiments may be implemented completely or partially in a form of a computer program product. The computer program product includes one or more computer instructions. When the computer instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, a twisted pair, and an optical fiber) or wireless (for example, infrared, microwave, or the like) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium, a semiconductor medium (for example, a solid-state drive (SSD)), or the like.

The foregoing descriptions are merely optional embodiments of this application, but are not intended to limit this application. Any modification or improvement made should fall within the protection scope of this application.

## Claims

1. An access control method, wherein the method comprises:
receiving (S103), by an authentication device, a packet sent by an access device, wherein the packet comprises a virtual local area network, VLAN, identifier; and
wherein the method is **characterized by** authenticating (S104), by the authentication device, based on the VLAN identifier and a preconfigured correspondence by using an authentication method corresponding to the VLAN identifier, a terminal device that sends the packet, wherein the correspondence comprises a mapping from a plurality of VLAN identifiers to at least two authentication methods and the at least two authentication methods comprise MAC authentication and captive portal authentication.

2. The method according to claim 1, wherein the correspondence further comprises a mapping from a port, connected to the access device, of the authentication device to the plurality of VLAN identifiers, and the authenticating, by the authentication device, based on the VLAN identifier and a preconfigured correspondence by using an authentication method corresponding to the VLAN identifier, a terminal device that sends the packet comprises:
when the packet is received from the port, authenticating, by the authentication device, by using the authentication method corresponding to the VLAN identifier, the terminal device that sends the packet.

3. The method according to claim 1 or 2, wherein the authenticating (S104), by the authentication device, by using the authentication method corresponding to the VLAN identifier, the terminal device that sends the packet comprises:
initiating, by the authentication device, Media Access Control, MAC, authentication when the authentication method corresponding to the VLAN identifier is MAC authentication and the packet is a first-specified-type packet, wherein the first-specified-type packet comprises an Address Resolution Protocol, ARP, packet or a Dynamic Host Configuration Protocol, DHCP, packet.

4. The method according to any one of claims 1 to 3, wherein the authenticating (S104), by the authentication device, by using the authentication method corresponding to the VLAN identifier, the terminal device that sends the packet comprises:
when the authentication method corresponding to the VLAN identifier is captive portal authentication and the packet is a second-specified-type packet, initiating, by the authentication device, captive portal authentication, wherein the second-specified-type packet comprises a Hypertext Transfer Protocol, HTTP, request packet or a Hypertext Transfer Protocol over Secure Socket Layer, HTTPS, request packet.

5. A switch, wherein the switch comprises a processor (41), a port (43), and a memory (42), the port (43) and the memory (42) are separately connected to the processor (41), and the processor (41) is configured to: receive, by using the port (43), a packet sent by an access device, wherein the packet comprises a virtual local area network, VLAN, identifier; and
wherein the switch is **characterized in that** the processor (41) is configured to authenticate, based on the VLAN identifier in the packet and a preconfigured correspondence by using an authentication method corresponding to the VLAN identifier, a terminal device that sends the packet, wherein the correspondence comprises a mapping from a plurality of VLAN identifiers to at least two authentication methods and the at least two authentication methods comprise MAC authentication and captive portal authentication.

6. The switch according to claim 5, wherein the correspondence further comprises a mapping from a port, connected to the access device, of the switch to the plurality of VLAN identifiers, and the processor (41) is configured to: when the packet is received from the port (43), authenticate, by using the authentication method corresponding to the VLAN identifier, the terminal device that sends the packet.

## Patentansprüche

1. Zugriffsteuerungsverfahren, wobei das Verfahren Folgendes umfasst:
Empfangen (S103) durch eine Authentifizierungsvorrichtung eines durch eine Zugriffsvorrichtung gesendeten Pakets, wobei das Paket eine virtuelle lokale Netzwerk(*virtual local area network* - VLAN)-Kennung umfasst; und
wobei das Verfahren durch Authentifizieren (S104) durch die Authentifizierungsvorrichtung basierend auf der VLAN-Kennung und einer vorkonfigurierten Entsprechung durch Verwenden eines der VLAN-Kennung entsprechenden Authentifizierungsverfahrens einer Endvorrichtung gekennzeichnet ist, die das Paket sendet, wobei die Entsprechung eine Zuordnung von mehreren VLAN-Kennungen zu wenigstens zwei Authentifizierungsverfahren umfasst und die wenigstens zwei Authentifizierungsverfahren eine MAC-Authentifizierung und eine Erfassungsportalauthentifizierung umfassen.

2. Verfahren nach Anspruch 1, wobei die Entsprechung ferner eine Zuordnung von einem mit der Zugriffsvorrichtung verbundenen Port der Authentifizierungsvorrichtung zu den mehreren VLAN-Kennungen und das Authentifizieren durch die Authentifizierungsvorrichtung basierend auf der VLAN-Kennung und eine vorkonfigurierte Entsprechung durch Verwenden eines der VLAN-Kennung entsprechenden Authentifizierungsverfahrens umfasst, wobei eine Endvorrichtung, die das Paket sendet, Folgendes umfasst:
wenn das Paket von dem Port empfangen wird, Authentifizieren durch die Authentifizierungsvorrichtung durch Verwenden des der VLAN-Kennung entsprechenden Authentifizierungsverfahrens der Endvorrichtung, die das Paket sendet.

3. Verfahren nach Anspruch 1 oder 2, wobei das Authentifizieren (S104) durch die Authentifizierungsvorrichtung durch Verwenden des der VLAN-Kennung entsprechenden Authentifizierungsverfahrens der Endvorrichtung, die das Paket sendet, Folgendes umfasst:
Einleiten durch die Authentifizierungsvorrichtung einer Mediumzugangssteuerung(*Media Access Control* - MAC)-Authentifizierung wenn das der VLAN-Kennung entsprechende Authentifizierungsverfahren eine MAC-Authentifizierung ist und das Paket ein Paket der ersten angegebenen Art ist, wobei das Paket der ersten angegebenen Art ein Adress-Resolution-Protokoll(ARP)-Paket oder ein Dynamic-Host-Configuration-Protokoll(DHCP)-Paket umfasst.

4. Verfahren nach einem der Ansprüche 1 bis 3, wobei das Authentifizieren (S104) durch die Authentifizierungsvorrichtung durch Verwenden des der VLAN-Kennung entsprechenden Authentifizierungsverfahrens der Endvorrichtung, die das Paket sendet, Folgendes umfasst:
wenn das der VLAN-Kennung entsprechende Authentifizierungsverfahren eine Erfassungsportalauthentifizierung ist und das Paket ein Paket einer zweiten angegebenen Art ist, Einleiten durch die Authentifizierungsvorrichtung der Erfassungsportalauthentifizierung, wobei das Paket der zweiten angegebenen Art ein Hypertext-Übertragungsprotokolls(*Hypertext Transfer Protocol* - HTTP)-Anforderungspaket oder ein Hypertext-Übertragungsprotokolls über eine SSL-Verschlüsselung(*Transfer Protocol over Secure Socket Layer* - HTTPS)-Anforderungspaket umfasst.

5. Schalter, wobei der Schalter einen Prozessor (41), einen Port (43) und einen Speicher (42) umfasst, wobei der Port (43) und der Speicher (42) einzeln mit dem Prozessor (41) verbunden sind und der Prozessor (41) zu Folgendem konfiguriert ist:
Empfangen durch Verwenden eines Ports (43) eines durch eine Zugriffsvorrichtung gesendeten Pakets, wobei das Paket eine Kennung eines virtuellen lokalen Netzwerks (VLAN) umfasst; und
wobei der Schalter **dadurch gekennzeichnet ist, dass** der Prozessor (41) zum Authentifizieren, basierend auf der VLAN-Kennung in dem Paket und einer vorkonfigurierten Entsprechung durch Verwenden eines der VLAN-Kennung entsprechenden Authentifizierungsverfahrens einer Endvorrichtung konfiguriert ist, die das Paket sendet, wobei die Entsprechung eine Zuordnung von mehreren VLAN-Kennungen zu wenigstens zwei Authentifizierungsverfahren umfasst und die wenigstens zwei Authentifizierungsverfahren eine MAC-Authentifizierung und eine Erfassungsportalauthentifizierung umfassen.

6. Schalter nach Anspruch 5, wobei die Entsprechung ferner eine Zuordnung von einem mit der Zugriffsvorrichtung verbundenen Port des Schalters zu mehreren VLAN-Kennungen umfasst und der Prozessor (41) zu Folgendem konfiguriert ist:
wenn das Paket von dem Port (43) empfangen wird, Authentifizieren durch Verwenden des der VLAN-Kennung entsprechenden Authentifizierungsverfahrens der Endvorrichtung, die das Paket sendet.

## Revendications

1. Procédé de commande d'accès, le procédé consistant à :
recevoir (S 103), par un dispositif d'authentification, un paquet envoyé par un dispositif d'accès, le paquet comprenant un identifiant de réseau local virtuel, VLAN ; et
le procédé étant **caractérisé par** l'authentification (S 104), par le dispositif d'authentification, sur la base de l'identifiant VLAN et d'une correspondance préconfigurée à l'aide d'une méthode d'authentification correspondant à l'identifiant VLAN, d'un dispositif terminal qui envoie le paquet, la correspondance comprenant un mappage d'une pluralité d'identifiants VLAN à au moins deux méthodes d'authentification et les au moins deux méthodes d'authentification comprenant l'authentification MAC et l'authentification de portail captif.

2. Procédé selon la revendication 1, la correspondance comprenant en outre un mappage d'un port, connecté au dispositif d'accès, du dispositif d'authentification à la pluralité d'identifiants VLAN, et l'authentification, par le dispositif d'authentification, sur la base de l'identifiant VLAN et d'une correspondance préconfigurée à l'aide d'une méthode d'authentification correspondant à l'identifiant VLAN, un dispositif terminal qui envoie le paquet comprenant :
lorsque le paquet est reçu du port, l'authentification, par le dispositif d'authentification, à l'aide de la méthode d'authentification correspondant à l'identifiant VLAN, du dispositif terminal qui envoie le paquet.

3. Procédé selon la revendication 1 ou 2, l'authentification (S 104), par le dispositif d'authentification, à l'aide de la méthode d'authentification correspondant à l'identifiant VLAN, du dispositif terminal qui envoie le paquet comprenant :
l'initiation, par le dispositif d'authentification, de l'authentification de commande d'accès au support, MAC, lorsque la méthode d'authentification correspondant à l'identifiant VLAN est l'authentification MAC et que le paquet est un premier paquet de type spécifié, le premier paquet de type spécifié comprenant un paquet de protocole de résolution d'adresse, ARP, ou un paquet de protocole de configuration dynamique des hôtes, DHCP.

4. Procédé selon l'une quelconque des revendications 1 à 3, l'authentification (S104), par le dispositif d'authentification, à l'aide de la méthode d'authentification correspondant à l'identifiant VLAN, le dispositif terminal qui envoie le paquet comprenant :
lorsque la méthode d'authentification correspondant à l'identifiant VLAN est une authentification de portail captif et que le paquet est un second paquet de type spécifié, l'initiation, par le dispositif d'authentification, d'une authentification de portail captif, le second paquet de type spécifié comprenant un paquet de demande de protocole de transfert hypertexte, HTTP, ou un paquet de demande de protocole de transfert hypertexte sur couche de sockets sécurisés, HTTPS.

5. Commutateur, le commutateur comprenant un processeur (41), un port (43) et une mémoire (42), le port (43) et la mémoire (42) étant connectés séparément au processeur (41), et le processeur (41) étant configuré pour :
recevoir, à l'aide du port (43), un paquet envoyé par un dispositif d'accès, le paquet comprenant un identifiant de réseau local virtuel, VLAN ; et
le commutateur étant **caractérisé en ce que** le processeur (41) est configuré pour authentifier, sur la base de l'identifiant VLAN dans le paquet et d'une correspondance préconfigurée à l'aide d'une méthode d'authentification correspondant à l'identifiant VLAN, un dispositif terminal qui envoie le paquet, la correspondance comprenant un mappage d'une pluralité d'identifiants VLAN à au moins deux méthodes d'authentification et les au moins deux méthodes d'authentification comprenant une authentification MAC et une authentification de portail captif.

6. Commutateur selon la revendication 5, la correspondance comprenant en outre un mappage depuis un port, connecté au dispositif d'accès, du commutateur vers la pluralité d'identifiants VLAN, et le processeur (41) étant configuré pour :
lorsque le paquet est reçu du port (43), authentifier, à l'aide de la méthode d'authentification correspondant à l'identifiant VLAN, le dispositif terminal qui envoie le paquet.
